(19) Europäisches Patentamt
European Patent Office
Office européen des brevets

(11) **EP 3 763 763 A1**

(12) **EUROPEAN PATENT APPLICATION**

(43) Date of publication:
**13.01.2021 Bulletin 2021/02**

(21) Application number: **19185926.3**

(22) Date of filing: **12.07.2019**

(51) Int Cl.:
**C08G 18/66** (2006.01)   **C08G 18/18** (2006.01)
**C08G 18/32** (2006.01)   **C08G 18/48** (2006.01)
**C08G 18/79** (2006.01)   **C08G 18/76** (2006.01)
**C08G 18/28** (2006.01)   **C08G 18/40** (2006.01)
**C08G 18/63** (2006.01)   **C08G 101/00** (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Covestro Deutschland AG
51373 Leverkusen (DE)**

(72) Inventor: **The designation of the inventor has not
yet been filed**

(74) Representative: **Levpat
c/o Covestro AG
Gebäude 4825
51365 Leverkusen (DE)**

(54) **PROCESS FOR PREPARING A RETICULATED FLEXIBLE POLYURETHANE FOAM**

(57)   The present invention relates to a one-step process for preparing a reticulated flexible polyurethane foam, a reticulated flexible polyurethane foam prepared by the process, and the use of the flexible polyurethane foam in sofa, mattress and the like. The process of the present invention is a one-step process, which does not comprise the step of the reticulation treatment, and therefore is safe, environmentally friendly and highly efficient.

EP 3 763 763 A1

## Description

### Technical Field

The present invention relates to a one-step process for preparing a reticulated flexible polyurethane foam, a reticulated flexible polyurethane foam prepared by the process, and the use of the flexible polyurethane foam in sofa, mattress and the like.

### Background Technology

The reticulated flexible polyurethane foam refers to a flexible polyurethane foam having a network structure, mainly composed of the three-dimensional skeleton of cells, without or with only a small amount of cell wall membranes, and having high air flow, relatively large cell size, and certain elasticity. Due to its unique structure and properties, this foam has been used in various fields such as in furniture, sofa, mattress, pillow, ground mat, garment and filter, as well as industrial packaging.

At present, the technology for industrially producing the reticulated flexible polyurethane foam is known and disclosed in the art, and its preparation process is usually a two-step process. In the first step, a flexible polyurethane foam is prepared by the chemical reaction of one or more hydroxyl (-OH) containing polyols with an organic and/or a modified organic polyisocyanate in presence of a catalyst, a blowing agent, a surfactant and/or an additive. These foams usually contain a large amount of cell wall membranes, and must be subjected to a second step of reticulation treatment to remove the large amount of original cell wall membranes from the foam, leaving the three-dimensional skeletal structure to obtain a reticulated flexible polyurethane foam. The second step of the reticulation treatment usually comprises a chemical corrosion method, an explosion method and the like. The chemical corrosion method is also called the alkali solution immersion method, in which the flexible polyurethane foam obtained after foaming is immersed in a high concentration of an alkali solution, such as sodium hydroxide solution, and taken out after a certain period of time, and the alkali solution is removed to obtain a reticulated foam. The method must be carried out with a high concentration of the alkali solution, which poses a safety hazard to the operator, and the post-treatment of the alkali solution may also bring environmental protection problems. The explosion method is to put the foam into a special explosion device, pass hydrogen and oxygen, and use the energy of the explosion to remove the cell membrane, thereby achieving the purpose of reticulation, but the method is dangerous, and an improper operation may cause a big explosion, resulting in a huge loss of life and property.

US3171820 and DE1911627 disclose the preparations of the reticulated flexible polyurethane foam and the non-viscoelastic flexible polyurethane foam, both of which are completed with the two-step methods.

CN102372854A discloses a method for preparing an super macroporous polyurethane reticulated foam plastic, comprising the following steps: (1) preparing raw materials, wherein the raw materials comprise the following components: a polyol, an isocyanate, a silicone foam stabilizer, water, an auxiliary blowing agent, a cross-linking agent, a cell opener, a gel catalyst and a colorant; (2) storing the raw materials in a storage tank with a constant temperature freezing device; (3) concurrently adding the raw materials excluding the isocyanate to a mixing device, and uniformly stirring them in 3 seconds to obtain a mixed material; (4) opening an isocyanate feeding valve, adding the isocyanate to the mixed material, carrying out the high-speed stirring to obtain a mixture; (5) injecting the mixture into a foaming chamber to carry out foaming, closing the foaming chamber after 150-200 seconds, then opening a gas valve to carry out the vacuum pumping; (6) removing the formed super macroporous polyurethane reticulated foam body with a reflection-like membrane from the foaming chamber, carrying out a reticulation treatment to form the super macroporous polyurethane reticulated foam plastic.

Chinese patent application CN106243304A discloses a polyol composition for preparing a viscoelastic and reticulated polyurethane foam, said polyol composition for preparing a viscoelastic and reticulated polyurethane foam comprising: b1) a first polyether polyol, wherein the first polyether polyol is a polyether polyol based on propylene oxide, and has a functionality of 2.6-3.2 and a hydroxyl number of 120-400 mg KOH/g, and the content of the first polyether polyol is 10-70 wt%, based on 100 wt% of the total weight of the polyol composition; b2) a second polyether polyol, wherein the second polyether polyol has 0-20 wt% of ethylene oxide units based on 100 wt% of the total weight of the second polyether polyol, and the second polyether polyol has a functionality of 1.8-3.2 and a hydroxyl number of 5-115 mg KOH/g; b3) a third polyether polyol, wherein the third polyether polyol has 50-100 wt% of ethylene oxide units based on 100 wt% of the total weight of the third polyether polyol, and the third polyether polyol has a functionality of 2-8 and a hydroxyl number of 20-240 mg KOH/g; and b6) a surfactant, wherein the content of the surfactant is 0.01-0.50 wt%, based on 100 wt% of the total weight of the polyol composition.

Despite the above disclosure, there is an urgent need in the industry for new methods for preparing the reticulated flexible polyurethane foam to meet the needs of production and application fields.

## Summary of the Invention

An aspect of the present invention is to provide a one-step process for preparing a reticulated flexible polyurethane foam, producing the reticulated flexible polyurethane foam by reacting a polyurethane reaction system comprising the following components:

Component A, at least one polyisocyanate comprising >80 wt%, preferably 90-100 wt%, based on the total weight of component A, of a carbodiimide-modified diphenylmethane diisocyanate, wherein the content of the carbodiimide group is 1.0-2.5 wt%, preferably 1.7-2.0 wt%, based on the total weight of the carbodiimide-modified diphenylmethane diisocyanate;

Component B, comprising:

B1) a polyether polyol having a functionality of 1, a weight-average molecular weight of >900 g/mol, preferably >1000 g/mol, particularly preferably 1200-1800 g/mol (test method with reference to GB/T 21863-2008), present in an amount of 1-25 wt%, preferably 10-20 wt%, based on the total weight of component B;

B2) at least one blowing agent; and

B3) at least one catalyst.

Preferably, the process does not comprise the step of the reticulation treatment.
Preferably, the component B further comprises:

B4) a polyether polyol, starting from glycerol and having a functionality of 3, an oxyethylene unit content of 0 wt% based on the total weight of B4, a weight-average molecular weight of 200-1500 g/mol, preferably 350-600 g/mol (test method with reference to GB/T 21863-2008), present in an amount of 10-60 wt%, preferably 10-30 wt%, based on the total weight of Component B;

B5) a polyether polyol, starting from glycerol and having a functionality of 3, an oxyethylene unit content of 1-20 wt% based on the total weight of B5, a weight-average molecular weight of 1000-8000 g/mol, preferably 2000-5000 g/mol (test method with reference to GB/T 21863-2008), present in an amount of 0-25 wt%, preferably 15-25wt%, based on the total weight of Component B;

B6) a polyether polyol, starting from propylene glycol and having a functionality of 2, an oxyethylene unit content of 0 wt% based on the total weight of B6, a weight-average molecular weight of 500-5000 g/mol, preferably 1000-3000 g/mol (test method with reference to GB/T 21863-2008), present in an amount of 5-60 wt%, preferably 10-30 wt%, based on the total weight of Component B;

B7) a polyether polyol, starting from glycerol and having a functionality of 3, an oxyethylene unit content of >50 wt% based on the total weight of B7, a weight-average molecular weight of 2000-10000 g/mol, preferably 3000-8000 g/mol (test method with reference to GB/T 21863-2008), present in an amount of 5-50 wt%, preferably 15-45 wt%, based on the total weight of Component B.

Optionally, the component B further comprises:
B8) a polymer polyol, having a styrene-acrylonitrile content of 10-50 wt% based on the total weight of the component B8 and a hydroxyl number of 12-56 mg KOH/g, preferably 16-45 mg KOH/g, present in an amount of 1-40 wt%, preferably 1-12 wt%, based on the total weight of Component B.
Preferably, the blowing agent is water present in an amount of 0.5-3 wt%, preferably 0.8-1.8 wt%, based on the total weight of Component B.
Preferably, the component B further comprises: B9) at least one chain extender present in an amount of 0.3-5 wt%, preferably 0.3-2 wt%, based on the total weight of component B.
The second aspect of the present invention is to provide a reticulated flexible polyurethane foam. The reticulated flexible polyurethane foam is prepared by the one-step process for preparing a reticulated flexible polyurethane foam according to the present invention, producing the reticulated flexible polyurethane foam by reacting a polyurethane reaction system comprising the following components:

Component A, at least one polyisocyanate comprising >80 wt%, preferably 90-100 wt%, based on the total weight of component A, of a carbodiimide-modified diphenylmethane diisocyanate, wherein the content of the carbodiimide group is 1.0-2.5 wt%, preferably 1.7-2.0 wt%, based on the total weight of the carbodiimide-modified diphenylmethane diisocyanate;

Component B, comprising:

B1) a polyether polyol having a functionality of 1, a weight-average molecular weight of >900 g/mol, preferably >1000 g/mol, particularly preferably 1200-1800 g/mol (test method with reference to GB/T 21863-2008), present in an amount of 1-25 wt%, preferably 10-20 wt%, based on the total weight of component B;

B2) at least one blowing agent; and

B3) at least one catalyst.

Preferably, the process does not comprise the step of the reticulation treatment.

Preferably, the component B further comprises:

B4) a polyether polyol, starting from glycerol and having a functionality of 3, an oxyethylene unit content of 0 wt% based on the total weight of B4, a weight-average molecular weight of 200-1500 g/mol, preferably 350-600 g/mol (test method with reference to GB/T 21863-2008), present in an amount of 10-70 wt%, preferably 10-20 wt%, based on the total weight of Component B;

B5) a polyether polyol, starting from glycerol and having a functionality of 3, an oxyethylene unit content of 1-20 wt% based on the total weight of B5, a weight-average molecular weight of 1000-8000 g/mol, preferably 2000-5000 g/mol (test method with reference to GB/T 21863-2008), present in an amount of 0-25 wt%, preferably 15-25wt%, based on the total weight of Component B;

B6) a polyether polyol, starting from propylene glycol and having a functionality of 2, an oxyethylene unit content of 0 wt% based on the total weight of B6, a weight-average molecular weight of 500-5000 g/mol, preferably 1000-3000 g/mol (test method with reference to GB/T 21863-2008), present in an amount of 5-60 wt%, preferably 10-30 wt%, based on the total weight of Component B;

B7) a polyether polyol, starting from glycerol and having a functionality of 3, an oxyethylene unit content of >50 wt% based on the total weight of B7, a weight-average molecular weight of 2000-10000 g/mol, preferably 3000-8000 g/mol (test method with reference to GB/T 21863-2008), present in an amount of 5-50 wt%, preferably 15-45 wt%, based on the total weight of Component B.

Optionally, the component B further comprises:
B8) a polymer polyol, having a styrene-acrylonitrile content of 10-50 wt% based on the total weight of the component B8 and a hydroxyl number of 12-56 mg KOH/g, preferably 16-45 mg KOH/g, present in an amount of 1-40 wt%, preferably 1-12 wt%, based on the total weight of Component B.

Preferably, the blowing agent is water present in an amount of 0.5-3 wt%, preferably 0.8-1.8 wt%, based on the total weight of Component B.

Preferably, the component B further comprises: B9) at least one chain extender present in an amount of 0.3-5 wt%, preferably 0.3-2 wt%, based on the total weight of component B.

Preferably, the density of the foam is 30-130 kg/m$^3$, preferably 40-110 kg/m$^3$ (according to GB/T 6343-1995).

Optionally, the cell number of the foam is 4-50 cells/25mm, preferably 5-35 cells/25mm, particularly preferably 5-15 cells/25mm.

Preferably, the reticulated flexible polyurethane foam has a falling-ball rebound rate of >20%, preferably 25-40% (according to GB/T6670-2008).

Preferably, the reticulated flexible polyurethane foam has a 40% compression hardness of 1.0-8.0 Kpa, preferably 2.0-5.0 Kpa (according to ISO 3386).

Preferably, the reticulated flexible polyurethane foam has an air flow of >110 L/min, preferably >120 L/min (according to ASTM D3574-11 Test G).

A further aspect of the present invention is to provide the use of the reticulated flexible polyurethane foam according to the present invention in furniture. The reticulated flexible polyurethane foam of the present invention can be widely used in sofa, mattress, pillow, ground mat, filter, and garment and the like.

A further aspect of the present invention is to provide a polyurethane product, which comprises the reticulated flexible polyurethane foam of the present invention.

Preferably, the polyurethane product is selected from sofa, mattress, seat cushion, pillow, ground mat, filter and garment.

The process of the present invention overcomes the defects and the shortages present in the traditional two-step process for preparing the reticulated flexible polyurethane foam, such as the safety hazard and the potential damage to the environment, and the relatively long production cycle, the relatively low production efficiency, the required investment for the additional reticulation treatment apparatus, the additional apparatus site, and the relatively high production cost. The one-step process for preparing a reticulated flexible polyurethane foam can safely and efficiently prepare the reticulated flexible polyurethane foam. In addition, unlike the conventional two-step process which is limited by the size of the reticulation treatment apparatus, and therefore the size of the reticulated flexible polyurethane foam prepared by the two-step process is also limited, the process of the present invention can flexibly prepare the reticulated flexible polyurethane foam having various sizes and shapes.

Moreover, the prepared reticulated flexible polyurethane foam not only has excellent physical properties, an excellent elasticity and comfortability, but also has a very satisfactory air flow and water permeability. Not only is it very comfortable to use, but it is also easy to wash, which greatly enhances its applicability.

**Detailed Description of the Invention**

The following terms used in the present invention have the following definitions or explanations:
pbw refers to the mass fraction of each component of the polyurethane reaction system;

The functionality refers to a value determined according to the industry formula: Functionality = hydroxyl number * molecular weight / 56100; wherein the molecular weight is determined by GPC high performance liquid chromatography.

The isocyanate index refers to the value calculated by the following formula:

$$\text{Isocyanate index (\%)} = \frac{\text{Mole number of isocyanate groups (NCO groups) in component A}}{\text{Mole number of isocyanate group-reactive groups in component B}} \times 100\%$$

.

The NCO content refers to the content of the NCO group in the system and is measured by GB/T 12009.4-2016.

The first aspect of the present invention is to provide a one-step process for preparing a reticulated flexible polyurethane foam, producing the reticulated flexible polyurethane foam by reacting a polyurethane reaction system comprising the following components:

Component A, at least one polyisocyanate comprising >80 wt%, preferably 90-100 wt%, based on the total weight of component A, of a carbodiimide-modified diphenylmethane diisocyanate, wherein the content of the carbodiimide group is 1.0-2.5 wt%, preferably 1.7-2.0 wt%, based on the total weight of the carbodiimide-modified diphenylmethane diisocyanate;

Component B, comprising:

B1) a polyether polyol having a functionality of 1, a weight-average molecular weight of >900 g/mol, preferably >1000 g/mol, particularly preferably 1200-1800 g/mol (test method with reference to GB/T 21863-2008), present in an amount of 1-25 wt%, preferably 10-20 wt%, based on the total weight of component B;

B2) at least one blowing agent; and

B3) at least one catalyst.

Preferably, the process does not comprise the step of the reticulation treatment.
Preferably, the component B further comprises:

B4) a polyether polyol, starting from glycerol and having a functionality of 3, an oxyethylene unit content of 0 wt% based on the total weight of B4, a weight-average molecular weight of 200-1500 g/mol, preferably 350-600 g/mol (test method with reference to GB/T 21863-2008), present in an amount of 10-60 wt%, preferably 10-30 wt%, based on the total weight of Component B;

B5) a polyether polyol, starting from glycerol and having a functionality of 3, an oxyethylene unit content of 1-20 wt% based on the total weight of B5, a weight-average molecular weight of 1000-8000 g/mol, preferably 2000-5000 g/mol (test method with reference to GB/T 21863-2008), present in an amount of 0-25 wt%, preferably 15-25wt%, based on the total weight of Component B;

B6) a polyether polyol, starting from propylene glycol and having a functionality of 2, an oxyethylene unit content of 0 wt% based on the total weight of B6, a weight-average molecular weight of 500-5000 g/mol, preferably 1000-3000 g/mol (test method with reference to GB/T 21863-2008), present in an amount of 5-60 wt%, preferably 10-30 wt%, based on the total weight of Component B;

B7) a polyether polyol, starting from glycerol and having a functionality of 3, an oxyethylene unit content of >50 wt% based on the total weight of B7, a weight-average molecular weight of 2000-10000 g/mol, preferably 3000-8000 g/mol (test method with reference to GB/T 21863-2008), present in an amount of 5-50 wt%, preferably 15-45 wt%, based on the total weight of Component B.

Optionally, the component B further comprises:
B8) a polymer polyol, having a styrene-acrylonitrile content of 10-50 wt% based on the total weight of the component B8 and a hydroxyl number of 12-56 mg KOH/g, preferably 16-45 mg KOH/g, the content of the polymer polyol is 1-40 wt%, preferably 1-12 wt%, based on the total weight of Component B.
Preferably, the blowing agent is water present in an amount of 0.5-3 wt%, preferably 0.8-1.8 wt%, based on the total weight of Component B.
Preferably, the component B further comprises: B9) at least one chain extender present in an amount of 0.3-5 wt%, preferably 0.3-2 wt%, based on the total weight of component B.
The second aspect of the present invention is to provide a reticulated flexible polyurethane foam, wherein the reticulated flexible polyurethane foam is produced by the one-step process for preparing a reticulated flexible polyurethane foam of the present invention, producing the reticulated flexible polyurethane foam by reacting a polyurethane reaction system comprising the following components:

Component A, at least one polyisocyanate comprising >80 wt%, preferably 90-100 wt%, based on the total weight of component A, of a carbodiimide-modified diphenylmethane diisocyanate, wherein the content of the carbodiimide group is 1.0-2.5 wt%, preferably 1.7-2.0 wt%, based on the total weight of the carbodiimide-modified diphenylmethane diisocyanate;
Component B, comprising:

B1) a polyether polyol having a functionality of 1, a weight-average molecular weight of >900 g/mol, preferably >1000 g/mol, particularly preferably 1200-1800 g/mol (test method with reference to GB/T 21863-2008), present in an amount of 1-25 wt%, preferably 10-20 wt%, based on the total weight of component B;

B2) at least one blowing agent; and

B3) at least one catalyst.

Preferably, the process does not comprise the step of the reticulation treatment.
Preferably, the component B further comprises:

B4) a polyether polyol, starting from glycerol and having a functionality of 3, an oxyethylene unit content of 0 wt% based on the total weight of B4, a weight-average molecular weight of 200-1500 g/mol, preferably 350-600 g/mol (test method with reference to GB/T 21863-2008), present in an amount of 10-60 wt%, preferably 10-30 wt%, based on the total weight of Component B;

B5) a polyether polyol, starting from glycerol and having a functionality of 3, an oxyethylene unit content of 1-20 wt% based on the total weight of B5, a weight-average molecular weight of 1000-8000 g/mol, preferably 2000-5000 g/mol (test method with reference to GB/T 21863-2008), present in an amount of 0-25 wt%, preferably 15-25wt%, based on the total weight of Component B;

B6) a polyether polyol, starting from propylene glycol and having a functionality of 2, an oxyethylene unit content of 0 wt% based on the total weight of B6, a weight-average molecular weight of 500-5000 g/mol, preferably 1000-3000 g/mol (test method with reference to GB/T 21863-2008), present in an amount of 5-60 wt%, preferably 10-30 wt%, based on the total weight of Component B;

B7) a polyether polyol, starting from glycerol and having a functionality of 3, an oxyethylene unit content of >50 wt% based on the total weight of B7, a weight-average molecular weight of 2000-10000 g/mol, preferably 3000-8000 g/mol (test method with reference to GB/T 21863-2008), present in an amount of 5-50 wt%, preferably 15-45 wt%, based on the total weight of Component B.

Optionally, the component B further comprises:
B8) a polymer polyol, having a styrene-acrylonitrile content of 10-50 wt% based on the total weight of the component B8 and a hydroxyl number of 12-56 mg KOH/g, preferably 16-45 mg KOH/g, present in an amount of 1-40 wt%, preferably 1-12 wt%, based on the total weight of Component B.

Preferably, the blowing agent is water present in an amount of 0.5-3 wt%, preferably 0.8-1.8 wt%, based on the total weight of Component B.

Preferably, the component B further comprises: B9) at least one chain extender present in an amount of 0.3-5 wt%, preferably 0.3-2 wt%, based on the total weight of component B.

Preferably, the density of the foam is 30-130 kg/m$^3$, preferably 40-110 kg/m$^3$ (according to GB/T 6343-1995).

Optionally, the cell number of the foam is 4-50 cells/25mm, preferably 5-35 cells/25mm, particularly preferably 5-15 cells/25mm. Those skilled in the art is known that the smaller the number of cells in the polyurethane foam is, the thicker the cells are. The number of cells in the common flexible polyurethane foam is 40-60 cells/25mm, however the reticulated foam according to the present invention can have a thicker cell structure and a corresponding smaller number of cells. Under the premise of eliminating the cell membrane (the cell membrane refers to a membran-like structure existing between the cell and the cell after the foam is formed, and the structure blocks the circulation of air and liquid between the cells), such a cell structure can obviously improve the air flow and water permeability of the foam.

Preferably, the reticulated flexible polyurethane foam has a falling-ball rebound rate of >20%, preferably 25-40% (according to GB/T6670-2008).

Preferably, the reticulated flexible polyurethane foam has a 40% compression hardness of 1.0-8.0 Kpa, preferably 2.0-5.0 Kpa (according to ISO 3386).

Preferably, the reticulated flexible polyurethane foam has an air flow of >110 L/min, preferably >120 L/min (according to ASTM D3574-11 Test G). The high air flow indicates that the foam has less cell membrane, the gas permeation resistance is small, and it is easier for gas to pass.

The component A of the polyurethane reaction system of the present invention comprises a carbodiimide-modified diphenylmethane diisocyanate. The carbodiimide-modified diphenylmethane diisocyanate refers to a diphenylmethane diisocyanate which is modified with carbodiimide. Its general preparation method is as follows: the isocyanate itself can be subjected to a condensation reaction in the presence of an organic phosphine as a catalyst under heating, generating a compound containing the carbodiimide group (-NCN-).

The content of the carbodiimide group in the carbodiimide-modified diphenylmethane diisocyanate useful in the present invention is 1.0-2.5 wt%, preferably 1.7-2.0 wt%, based on the total weight of the carbodiimide-modified diphenylmethane diisocyanate. The used amount of the carbodiimide-modified diphenylmethane diisocyanate is >80 wt%, preferably 90-100 wt%, based on the total weight of component A.

The isocyanate that can be used in the present invention comprises, but is not limited to 1,4-diisocyanate, hexamethylene diisocyanate (HDI), dodecylene 1,2-diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethylcyclohexane, hexahydrotoluene-2,4-diisocyanate, hexahydrophenyl-1,3-diisocyanate, hexahydrophenyl-1,4-diisocyanate, perhydrogenated-diphenylmethane 2,4-diisocyanate, perhydrogenated diphenylmethane 4,4-diisocyanate, phenylene 1,3-diisocyanate, phenylene 1,4-diisocyanate, stilbene-1,4-diisocyanate, 3,3-dimethyl-4,4-diphenyl diisocyanate, toluene-2,4-diisocyanate (TDI), toluene-2,6-diisocyanate (TDI), diphenylmethane-2,4'-diisocyanate (MDI), diphenylmethane-2,2'-diisocyanate (MDI), diphenylmethane-4,4'-diisocyanate (MDI), mixtures of diphenylmethane diisocyanate and/or diphenylmethane diisocyanate homologs having more rings, polyphenylene polymethylene polyisocyanate (polymerized MDI), naphthylidene-1,5-diisocyanate (NDI), their isomers, any mixtures of them and their isomers.

Useful polyisocyanates further include isocyanates modified with carbodiimides, allophanates or isocyanates, preferably but not limited to diphenylmethane diisocyanate, carbodiimide modified diphenylmethane diisocyanate, their isomers, any mixtures of them and their isomers.

When used in the present invention, polyisocyanates include isocyanate dimers, trimers, tetramers, or combinations thereof.

In a preferred embodiment of the invention, the isocyanate is a mixture of poly-MDI, MDI and TDI. The mixture has an NCO content of 20-48 wt%, preferably 25-45 wt%, particularly preferably 28-40 wt%. The NCO content is measured by GB/T 12009.4-2016.

As used herein, unless otherwise indicated, the functionality and the hydroxyl number of the organic polyol refer to the average functionality and the average hydroxyl number. The methods for measuring the hydroxyl number are well known to those skilled in the art and for example, those disclosed in Houben Weyl, Methoden der Organischen Chemie, vol. XIV/2 Makromolekulare Stoffe, p.17, Georg Thieme Verlag; Stuttgart 1963. The entire contents of this document are incorporated herein by reference.

When used in the present invention, polyether polyols have the meanings well known to those skilled in the art and can be prepared by known processes, for example, by reacting an olefin oxide with a starter in the presence of a catalyst. The catalyst is preferably, but not limited to, a basic hydroxide, a basic alkoxide, antimony pentachloride, boron trifluoride-diethyl etherate, or a mixture thereof. The olefin oxide is preferably but not limited to tetrahydrofuran, ethylene oxide, propylene oxide, 1,2-butylene oxide, 2,3-butylene oxide, styrene oxide, or a mixture thereof, particularly preferably ethylene oxide and/or propylene oxide. The starter is preferably but not limited to a polyhydroxyl compound or a polyamino compound; the polyhydroxyl compound is preferably but not limited to water, ethylene glycol, 1,2-propylene glycol, 1,3-propylene glycol, diethylene glycol, trimethylolpropane, glycerol, bisphenol A, bisphenol S or a mixture thereof; the polyamino compound is preferably but not limited to ethylene diamine, propylene diamine, tetramethylene diamine, hexamethylene diamine, diethylene triamine, toluylene diamine or a mixture thereof.

The blowing agent of the present invention may be selected from various physical blowing agents or chemical blowing agents, and is preferably but not limited to water, halogenated hydrocarbons, hydrocarbon compounds, and gases. The halogenated hydrocarbon is preferably but not limited to monochlorodifluoromethane, dichloromonofluoromethane, dichlorofluoromethane, trichlorofluoromethane, or a mixture thereof. The hydrocarbon compound is preferably but not limited to butane, pentane, cyclopentane, hexane, cyclohexane, heptane, or a mixture thereof. The gas is preferably but not limited to air, $CO_2$, or $N_2$. The blowing agent is particularly preferably water. The used amount of the blowing agent is determined by the desired density of the polyurethane. Preferably, the blowing agent of the present invention is 0.5-3 wt%, preferably 0.8-1.8 wt% of water based on the total weight of component B.

The catalyst of the present invention is preferably but not limited to an amine catalyst, an organo-metallic catalyst or a mixture thereof. The amine catalyst is preferably but not limited to triethylamine, tributylamine, triethylene diamine, N-ethylmorpholine, N,N,N',N'-tetramethyl-ethylene diamine, pentamethyl diethylene-triamine, N,N-methylaniline, N,N-dimethylaniline, or a mixture thereof. The organo-metallic catalyst is preferably but not limited to an organo-tin compound, for example, tin (II) acetate, tin (II) octylate, tin ethylhexanoate, tin laurate, dibutyltin oxide, dibutyltin dichloride, dibutyltin diacetate, dibutyltin maleate, dioctyltin diacetate, and combinations thereof.

Preferably, the polyurethane reaction system of the present invention further comprises a surfactant, which is preferably but not limited to an ethylene oxide derivative of a siloxane. The surfactant is present in an amount of 0.01-1 pbw, preferably 0.02-0.5 pbw, particularly preferably 0.03-0.2 pbw.

Optionally, the polyurethane reaction system of the present invention may further comprise a chain extender. The chain extender that can be used according to the present invention is selected from hydroxy- or amino-containing low molecular weight polyfunctional alcohol or amine compounds, and the commonly used alcohol chain extenders are 1,4-butanediol (BDO), 1,6-hexanediol, glycerol, trimethylolpropane, diethylene glycol (DEG), triethylene glycol, neopentyl glycol(NPG), sorbitol, diethylaminoethanol (DEAE) and the like. The amine chain extenders are MOCA and liquid MOCA produced by modification with formaldehyde, ethylene diamine (EDA), N,N-dihydroxyl(diisopropyl)aniline (HPA) and the like. It further comprises hydroquinone-bis(β-hydroxyethyl)ether (HQEE). Preferably, the chain extender used in the present invention is present in an amount of 0.3-5 wt%, preferably 0.3-2 wt%, based on the total weight of component B.

We have unexpectedly found through repeated experiments that the process of the present invention can overcome the defects and the shortages present in the traditional two-step process for preparing the reticulated flexible polyurethane foam, such as the safety hazard and the potential damage to the environment, the relatively long production cycle, the relatively low production efficiency, the required investment for the additional reticulation treatment apparatus, the additional apparatus site, and the relatively high production cost. The one-step process for preparing a reticulated flexible polyurethane foam according to the present invention can safely and efficiently prepare the reticulated flexible polyurethane foam.

In addition, unlike the conventional two-step process which is limited by the size of the reticulation treatment apparatus, and therefore the size of the reticulated flexible polyurethane foam prepared by the two-step process is also limited, the process of the present invention can flexibly prepare the reticulated flexible polyurethane foam having various sizes and shapes.

Moreover, the prepared reticulated flexible polyurethane foam not only has excellent physical properties, an excellent elasticity and comfortability, but also has a very satisfactory air flow and water permeability. Not only is it very comfortable to use, but it is also easy to wash, which greatly enhances its applicability.

A further aspect of the present invention is to provide the use of the reticulated flexible polyurethane foam of the present invention in furniture. The reticulated flexible polyurethane foam of the present invention can be widely used in sofa, mattress, pillow, ground mat, filter, garment and the like.

A further aspect of the present invention is to provide a polyurethane product, which comprises the reticulated flexible polyurethane foam of the present invention.

Preferably, the polyurethane product is selected from sofa, mattress, pillow, ground mat, filter and garment.

**Examples**

The test methods in examples are as follows:

Foam density refers to the density of polyurethane foam; it is tested according to the method of GB/T 6343-1995.
Compression hardness refers to the compression hardness of the polyurethane foam; it is tested according to the method of ISO 3386, and the sample size is 100 mm × 100 mm × 50 mm.
The cell number refers to the number of cells on the unit linear distance (25 mm) of the polyurethane foam.
The ball rebound rate refers to the falling-ball rebound rate of the polyurethane foam, which is used to characterize the elasticity of the foam; it is tested according to the method of GB/T6670-2008.
The air flow refers to the breathabilityof polyurethane foam or is called as the air flow rate, which is used to characterize the breathability performance of the foam and reflects the cell structure of the foam; the test method of the air flow is commonly carried out according to ASTM D3574-11 Test G, wherein the test sample is placed in a small vacuumizable chamber to maintain an air pressure difference across two sides of the foam of 125 Pa, and the amount of air passing through the foam sample per unit time as required is measured as the air flow. (It should be particularly noted that, the test for the air flow of the foam in examples of the present invention is carried out with a Foam Porosity Tester Digital (Model: F0023) apparatus manufactured by IDM Instruments Pty Ltd, which satisfies the requirement of the standard ASTM D3574-11 Test G, and has a measurement range of 2-200 L/min. When the foams of examples were tested with the apparatus, it was found that, even if the power of the apparatus was turned to the maximum, the gas pressure difference across two sides of the foam could not reach 125 Pa as required by ASTM D3574-11 Test G, which indicated the foams of examples had very excellent air flow, and was beyond the test range of the apparatus as required by ASTM D3574-11 Test G. In order to carry out the measurement, the air pressure difference across two sides of the foam was adjusted to 60 Pa for the test of the air flow.)

**Table 1 - Source of raw materials**

| Raw material name (model/specification) | Source |
|---|---|
| Isocyanate 1 (carbodiimide-modified diphenylmethane diisocyanate, Desmodur CD-C) | Covestro Polymers (China) Co., Ltd. |
| Isocyanate 2 (MDI mixture, Desmodur 3133) | Covestro Polymers (China) Co., Ltd. |
| Mixed polyether polyol - a polyether polyol* mixture comprising polyethers 1, 2, 3, 5 and 6 in Table 2 (a mixture particularly containing monofunctional, difunctional and trifunctional polyether polyols, Bayflex 88XA124) | Covestro Polymers (China) Co., Ltd. |
| Polyether polyol 4 - a High ethylene oxide polyether (SBU polyol S240) | Covestro Polymers (China) Co., Ltd. |
| Catalyst 1 - tertiary amine catalyst Niax A-1 | Momentive Performance Materials Inc. |
| Catalyst 2 - tertiary amine catalyst Niax A-33 | Momentive Performance Materials Inc. |
| Blowing agent | Water |
| Surfactant-Niax L-668 | Momentive Performance Materials Inc. |
| Chain extender - 1,4-butanediol | Commercially available |
| Remarks: polyether 1 is a monofunctional polyether glycol (corresponding to component B1) ; polyether 2 is a trifunctional polyether glycol (corresponding to component B4), polyether 3 is a trifunctional polyether glycol (corresponding to component B5 ) ; polyether 4 is a trifunctional high oxyethylene polyether (corresponding to component B7), polyether 5 is a difunctional polyether glycol (corresponding to component B6) ; polyether 6 is polymer polyol (corresponding to component B8). | |

**Preparation of the reticulated flexible polyurethane foam of the present invention**

The polyether polyol, the blowing agent, the surfactant, the catalyst and the chain extender, which were controlled at a temperature of 23 ± 1 °C, were added to a 5L plastic beaker according to the used amounts listed in Table 2, and the educts were stirred with an agitator having three impellers (with a stirring head diameter of about 7 cm) at 2000 rpm for 30 seconds. The isocyanate component was added (isocyanate 1 was added in the preparation of Example 1 and Example 2, isocyanate 2 was added in the preparation of Comparative Example), and mixed rapidly for 7 seconds. The mixture was poured into a foaming box, and foamed freely until the reaction was completed. The foam was aged for 72 hour and then subjected to various performance tests.

Table 2: General formulation of the reticulated flexible polyurethane foam and the properties of the prepared foam

|  | Example 1 | Example 2 | Comparative Example 1 |
|---|---|---|---|
| Formulation (pbw) |  |  |  |
| polyether 1 | 12 | 12 | 12 |
| polyether 2 | 20 | 20 | 20 |
| polyether 3 | 20 | 20 | 20 |
| polyether 4 | 30 | 30 | 30 |
| polyether 5 | 16 | 16 | 16 |
| polyether 6 | 2 | 2 | 2 |
| Blowing agent | 1.1 | 1.1 | 1.1 |
| Surfactant | 0.1 | 0.1 | 0.1 |
| Catalyst 1 | 0.20 | 0.20 | 0.20 |
| Catalyst 2 | 0.14 | 0.14 | 0.14 |
| Chain extender | 0.5 | 0.5 | 0.5 |
| Isocyanate 1 | 49.2 | 44.5 |  |
| Isocyanate 2 |  |  | 44.8 |
| Isocyanate index | 121 | 110 | 121 |
| Foam properties |  |  |  |
| density, kg/m3 | 78 | 76 | 75 |
| Compression hardness 40%, Kpa | 4.5 | 3.83 | 3.08 |
| Cell number, cells/25mm | 10 | 14 | 18 |
| Ball Rebound rate, % | 26 | 30 | 16 |
| Air flow @ 60pa pressure difference, L/min | 123 | 130 | 106 |

It can be seen from the above series of test results that the data such as the ball rebound rate and the air flow of the polyurethane foams prepared in Example 1 and Example 2 are superior to those of Comparative Example 1, demonstrating that the method of the present invention is a safe, efficient and economic one-step process, and at the same time the prepared reticulated flexible polyurethane foam is also more excellent in physical properties, and its elasticity and comfortability are more satisfactory. In addition, the number of cells of the present invention is relatively small, and the reticulated flexible polyurethane foam having a small number of cells is greatly enhanced in the air flow and the water permeability, which greatly improves the applicability thereof.

While the preferred embodiments have been disclosed hereinabove to describe the present invention, however they are not intended to limit the invention. It is obvious to those skilled in the art that various changes and modifications can be made without departing from the spirit and scope of the invention. The protection scope of the invention shall be subject to the scope of the claims of the patent application.

**Claims**

1. A one-step process for preparing a reticulated flexible polyurethane foam, producing the reticulated flexible polyurethane foam by reacting a polyurethane reaction system comprising the following components:

Component A, at least one polyisocyanate comprising >80 wt%, preferably 90-100 wt%, based on the total weight of component A, of a carbodiimide-modified diphenylmethane diisocyanate, wherein the content of the carbodiimide group is 1.0-2.5 wt%, preferably 1.7-2.0 wt%, based on the total weight of the carbodiimide-modified diphenylmethane diisocyanate;

Component B, comprising:

B1) a polyether polyol having a functionality of 1, a weight-average molecular weight of >900 g/mol, preferably >1000 g/mol, particularly preferably 1200-1800 g/mol (test method with reference to GB/T 21863-2008), present in an amount of 1-25 wt%, preferably 10-20 wt%, based on the total weight of component B;

B2) at least one blowing agent; and

B3) at least one catalyst.

2. The process according to claim 1, **characterized in that** said process does not comprise a step of reticulation treatment.

3. The process according to claim 1, **characterized in that** said component B further comprises:

B4) a polyether polyol, starting from glycerol and having a functionality of 3, an oxyethylene unit content of 0 wt% based on the total weight of B4, a weight-average molecular weight of 200-1500 g/mol, preferably 350-600 g/mol (test method with reference to GB/T 21863-2008), present in an amount of 10-60 wt%, preferably 10-30 wt%, based on the total weight of Component B;

B5) a polyether polyol, starting from glycerol and having a functionality of 3, an oxyethylene unit content of 1-20 wt% based on the total weight of B5, a weight-average molecular weight of 1000-8000 g/mol, preferably 2000-5000 g/mol (test method with reference to GB/T 21863-2008), present in an amount of 0-25 wt%, preferably 15-25wt%,

based on the total weight of Component B;

B6) a polyether polyol, starting from propylene glycol and having a functionality of 2, an oxyethylene unit content of 0 wt% based on the total weight of B6, a weight-average molecular weight of 500-5000 g/mol, preferably 1000-3000 g/mol (test method with reference to GB/T 21863-2008), present in an amount of 5-60 wt%, preferably 10-30 wt%, based on the total weight of Component B;

B7) a polyether polyol, starting from glycerol and having a functionality of 3, an oxyethylene unit content of >50 wt% based on the total weight of B7, a weight-average molecular weight of 2000-10000 g/mol, preferably 3000-8000 g/mol (test method with reference to GB/T 21863-2008), present in an amount of 5-50 wt%, preferably 15-45 wt%, based on the total weight of Component B.

4. The process according to any one of claims 1-3, **characterized in that** the component B further comprises:
B8) a polymer polyol, having a styrene-acrylonitrile content of 10-50 wt% based on the total weight of the component B8 and a hydroxyl number of 12-56 mg KOH/g, preferably 16-45 mg KOH/g, the content of the polymer polyol is 1-40 wt%, preferably 1-12 wt%, based on the total weight of Component B.

5. The process according to any one of claims 1-3, **characterized in that** the blowing agent is water present in an amount of 0.5-3 wt%, preferably 0.8-1.8 wt%, based on the total weight of Component B.

6. The process according to any one of claims 1-3, **characterized in that** the component B further comprises: B9) at least one chain extender present in an amount of 0.3-5 wt%, preferably 0.3-2 wt%, based on the total weight of component B.

7. A reticulated flexible polyurethane foam prepared with the one-step process for preparing a reticulated flexible polyurethane foam according to any one of claims 1-6.

8. The reticulated flexible polyurethane foam according to claim 7, **characterized in that** the density of the foam is 30-130 kg/m$^3$, preferably 40-110 kg/m$^3$ (according to GB/T 6343-1995).

9. The reticulated flexible polyurethane foam according to claim 7 or 8, **characterized in that** the cell number of the foam is 4-50 cells/25mm, preferably 5-35 cells/25mm, particularly preferably 5-15 cells/25mm.

10. The reticulated flexible polyurethane foam according to claim 7 or 8, **characterized in that** the reticulated flexible polyurethane foam has a falling-ball rebound rate of >20%, preferably 25-40% (according to GB/T6670-2008).

11. The reticulated flexible polyurethane foam according to claim 7 or 8, **characterized in that** the reticulated flexible polyurethane foam has a 40% compression hardness of 1.0-8.0 Kpa, preferably 2.0-5.0 Kpa (according to ISO 3386).

12. The reticulated flexible polyurethane foam according to claim 7 or 8, **characterized in that** the reticulated flexible polyurethane foam has an air flow of >110 L/min, preferably >120 L/min (according to ASTM D3574-11 Test G).

13. A use of the reticulated flexible polyurethane foam according to any one of claims 7-12 in furniture.

14. A polyurethane product comprising the reticulated flexible polyurethane foam according to any one of claims 7-12.

15. The polyurethane product according to claim 14, **characterized in that** the polyurethane product is selected from sofa, mattress, seat cushion, pillow, ground mat, filter and garment.

Europäisches
Patentamt

European
Patent Office

Office européen
des brevets

# EUROPEAN SEARCH REPORT

Application Number

EP 19 18 5926

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/155516 A1 (LI LIQIANG [CN] ET AL) 7 June 2018 (2018-06-07) * page 4; example 3; table 1 * * paragraph [0002] * ----- | 1-15 | INV. C08G18/66 C08G18/18 C08G18/32 C08G18/48 |
| A | US 10 077 331 B2 (HYUNDAI MOTOR CO LTD [KR]) 18 September 2018 (2018-09-18) * column 9, line 25 - line 55; table 1 * ----- | 1-15 | C08G18/79 C08G18/76 C08G18/28 C08G18/40 C08G18/63  ADD. C08G101/00 |

TECHNICAL FIELDS
SEARCHED        (IPC)

C08G

The present search report has been drawn up for all claims

| Place of search | Date of completion of the search | Examiner |
|---|---|---|
| Munich | 28 January 2020 | Ojea Jimenez, Isaac |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

............................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 19 18 5926

This annex lists the patent family members relating to the patent documents cited in the above-mentioned European search report.
The members are as contained in the European Patent Office EDP file on
The European Patent Office is in no way liable for these particulars which are merely given for the purpose of information.

28-01-2020

| Patent document cited in search report | | Publication date | Patent family member(s) | | Publication date |
|---|---|---|---|---|---|
| US 2018155516 | A1 | 07-06-2018 | CN | 106243304 A | 21-12-2016 |
| | | | EP | 3307828 A1 | 18-04-2018 |
| | | | JP | 2018517043 A | 28-06-2018 |
| | | | US | 2018155516 A1 | 07-06-2018 |
| | | | WO | 2016198433 A1 | 15-12-2016 |
| US 10077331 | B2 | 18-09-2018 | CN | 107778448 A | 09-03-2018 |
| | | | KR | 20180024933 A | 08-03-2018 |
| | | | US | 2018057630 A1 | 01-03-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3171820 A
- DE 1911627
- CN 102372854 A
- CN 106243304 A

- GB 218632008 T
- GB 63431995 T
- GB 66702008 T

### Non-patent literature cited in the description

- Methoden der Organischen Chemie. **HOUBEN WEYL.** Makromolekulare Stoffe. Georg Thieme Verlag, 1963, vol. XIV/2, 17